# EUROPÄISCHE PATENTANMELDUNG

(11) **EP 4 223 449 A1**
(43) Veröffentlichungstag der Anmeldung: **09.08.2023**
(21) Anmeldenummer: 22154976.9
(22) Anmeldetag: 03.02.2022
(51) Int. Cl.: B23P 19/04, B25J 1/00

(54) **VERFAHREN, MONTAGEVORRICHTUNG, MONTAGEZELLE UND MEHRFACHGREIFVORRICHTUNG ZUR AUTOMATISIERTEN MONTAGE EINES RAHMENS FÜR EIN LUFTKANALELEMENT**

(71) Anmelder: ARRTSM GMBH, 72135 Dettenhausen (DE)
(72) Erfinder: Gauli, Yudhisthir, 72135 Dettenhausen (DE)
(74) Vertreter: Witte, Weller & Partner Patentanwälte mbB

(57) **Zusammenfassung**

Die Erfindung betrifft ein Verfahren, eine Montagevorrichtung, eine Montagezelle sowie eine Mehrfachgreifvorrichtung zur automatisierten Montage eines Rahmens (14) bestehend aus Eckwinkeln (16) und Flanschprofilen (19) für ein Luftkanalelement (11), bei dem mit einer Handhabungseinrichtung (32) eine Montagevorrichtung (30) mit Flanschprofilen (19) und Eckwinkeln (16) bestückt wird, bei dem zwei einander gegenüberliegende und zu einem Flanschprofil (19) ausgerichtete Eckwinkel (16) in das Flanschprofil (19) eingesteckt werden und eine Montagegruppe (81) gebildet wird, bei der zwei einander gegenüberliegende Montagegruppen (81) zu den dazwischen angeordneten Flanschprofilen (19) mit freiem Einsteckfinger (17) der Eckwinkel (16) der Montagegruppe (81) in die Flanschprofile (19) eingesteckt werden und ein geschlossener Rahmen (14) gebildet wird.

## Beschreibung

Die Erfindung betrifft ein Verfahren zur automatisierten Montage eines Rahmens bestehend aus Flanschprofilen und Eckwinkeln für einen Luftkanalabschnitt zur Bildung eines Luftkanalelementes. Die Erfindung betrifft des Weiteren eine Montagevorrichtung sowie eine Montagezelle mit einer solchen Montagevorrichtung und einer Mehrfachgreifvorrichtung zur automatisierten Montage des Rahmens.

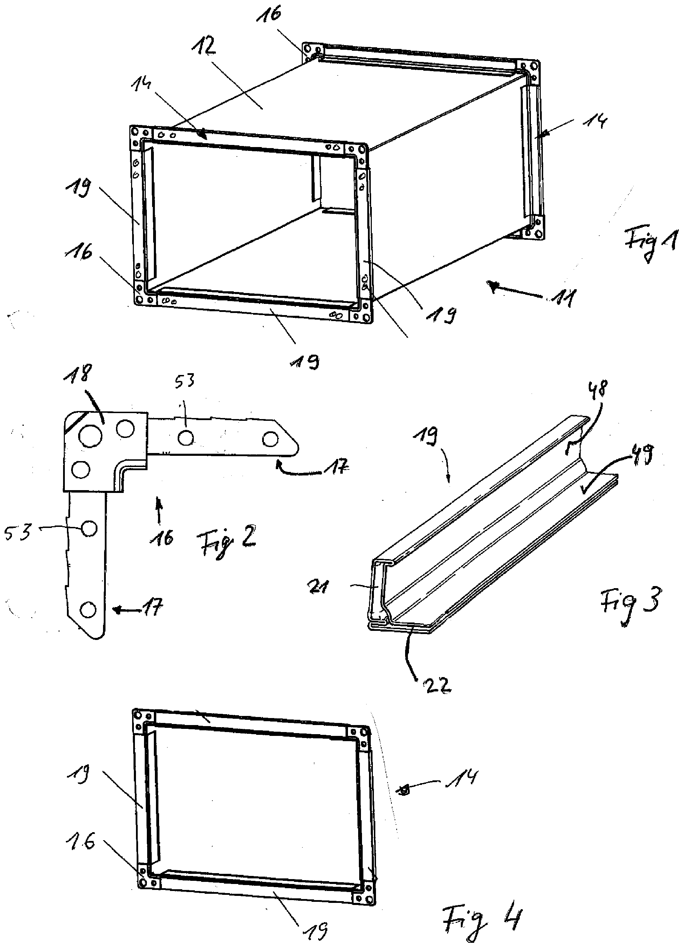

Aus der EP 3 425 251 B1 ist ein Luftkanalelement 11 bekannt, welches in Figur 1 dargestellt ist. Dieses Luftkanalelement 11 besteht aus einem Luftkanalabschnitt und zwei Rahmen, die jeweils am stirnseitigen Ende des Luftkanalabschnitts aufgesteckt sind. Zur Herstellung des Rahmens sind vier Eckwinkel 14 gemäß Figur 2 und vier Flanschprofile 12 gemäß Figur 3 erforderlich. Die Eckwinkel 14 bestehen aus zwei im rechten Winkel zueinander ausgerichteten Einsteckfingern 17, die durch ein Mittelteil 18 miteinander verbunden sind. Diese Einsteckfinger 17 können Befestigungsbohrungen 53 aufweisen für die Einbringung einer Prägestelle nach dem Einstecken des Einsteckfingers 17 in das Flanschprofil 12, Die Flanschprofile 12 umfassen zumindest eine Kammer 21, in welcher der Einsteckfinger 17 des Eckwinkels 14 zur Verbindung des Eckwinkels 14 mit dem Flanschprofil 12 einsteckbar ist. Des Weiteren umfasst das Flanschprofil 12 eine einseitig offene, zweite Kammer 22, in welche ein stirnseitiges Ende des Luftkanalabschnitts 12 einsteckbar ist. Die Ausführungsform des Eckwinkels 14 gemäß Figur 2 sowie dieProfilierung des Flanschprofils 12 gemäß Figur 3 sind nur beispielhaft.

Zur Herstellung des Rahmens gemäß Figur 4 werden die Eckwinkel 14mit den Flanschprofilen 12 verbunden, um diesen geschlossenen Rahmen zu bilden. Diese Herstellung des Rahmens gemäß Figur 4 erfolgt manuell.

Der Erfindung liegt die Aufgabe zugrunde, ein Verfahren zur automatisierten Montage eines Rahmens, bestehend aus Eckwinkeln und Flanschprofilen, für ein Luftkanalelement vorzuschlagen, um Montagekosten einzusparen. Des Weiteren liegt der Erfindung die Aufgabe zugrunde, eine Montagevorrichtung sowie eine Montagezelle mit einer solchen Montagevorrichtung zur automatisierten Montage des Rahmens vorzuschlagen als auch eine Mehrfachgreifvorrichtung, welche bei der automatisierten Montage des Rahmens eingesetzt wird, um Montagekosten einzusparen.

Diese Aufgabe wird durch ein Verfahren zur automatisierten Montage gelöst, bei dem mit einer Handhabungseinrichtung eine Montagevorrichtung mit Flanschprofilen und Eckwinkeln bestückt wird und bei dem zwei einander gegenüberliegende und zu einem Flanschprofil ausgerichtete Eckwinkel in das Flanschprofil, vorzugsweise gleichzeitig, eingesteckt werden und eine erste Montagegruppe gebildet wird und bei dem zwei einander gegenüberliegende Montagegruppen zu dazwischen angeordneten Flanschprofilen positioniert werden und freie Einsteckfinger der Eckwinkel von der Montagegruppe in diese Flanschprofile, vorzugsweise gleichzeitig, eingesteckt werden und ein geschlossener Rahmen gebildet wird. Dieses Verfahren ermöglicht, dass die Montagevorrichtung automatisch mit Flanschprofilen und Eckwinkeln bestückt wird und darauffolgend automatisiert den geschlossenen Rahmen für ein Luftkanalelement bildet. Dadurch kann eine Herstellung von solchen Rahmen unabhängig von Arbeitszeiten eines Werkers erfolgen. Insbesondere können nachts solche Rahmen hergestellt werden, die darauffolgend mit Luftkanalabschnitten verbunden werden oder in Verpackungseinheiten einsortiert werden, um beispielsweise an eine Montagestelle vor Ort zu liefern.

Bevorzugt ist vorgesehen, dass mit einer Mehrfachgreifvorrichtung die Montagevorrichtung mit Eckwinkeln und Flanschprofilen bestückt wird. Dadurch können Prozesszeiten verkürzt werden, da ein Wechsel einer Greifvorrichtung, die nur die Eckwinkel oder nur die Flanschprofile greifen kann, nicht mehr erforderlich ist.

Bevorzugt ist vorgesehen, dass die Flanschprofile und die Eckwinkel in Magazinen sortiert und ausgerichtet bereitgestellt werden und von der Mehrfachgreifvorrichtung aufeinanderfolgend gegriffen werden.

Dadurch kann eine weitere Prozesszeitverkürzung bei der Herstellung und Montage desRahmens erzielt werden.

Alternativ kann vorgesehen sein, dass die Flanschprofile und/oder Eckwinkel chaotisch in Transportbehältern bereitgestellt werden, daraus entnommen und auf einem Vorlagetisch aufgelegt werden, damit darauffolgend die Flanschprofile und/oder Eckwinkel in einer definierten Lage mit der Mehrfachgreifvorrichtung gegriffen werden können. Dadurch kann eine kostengünstige Bereitstellung der Flanschprofile und/oder Eckwinkel erfolgen. Vorteilhafterweise kann durch eine optische Einrichtung die Ausrichtung und Lage der Flanschprofile und/oder Eckwinkel erkannt und dementsprechend die Mehrfachgreifvorrichtung zum Greifen der Flanschprofile und/oder der Eckwinkel ausgerichtet und gesteuert werden.

Vorteilhafterweise werden durch die Mehrfachgreifvorrichtung alle Eckwinkel und Flanschprofile zur Bildung des Rahmens aufgenommen und mit einer einzigen Verfahrbewegung zur Bestückung der Montagevorrichtung verfahren. Dadurch kann des Weiteren eine Prozesszeitoptimierung ermöglicht werden.

Insbesondere werden mit der Mehrfachgreifvorrichtung aufeinanderfolgend Eckwinkelaufnahmen und Flanschprofilaufnahmen der Montagevorrichtung mit den Eckwinkeln und Flanschprofilen bestückt. Dabei können beispielsweise zunächst nur die Eckwinkel oder nur die Flanschprofile in die jeweilige Aufnahme eingesetzt werden. Alternativ kann auch eine aufeinanderfolgende Abarbeitung ermöglicht sein, wonach ein Eckwinkel und darauffolgend ein Flanschprofll und wiederum darauffolgend ein Eckwinkel und darauffolgend ein Flanschprofil in die jeweilige Aufnahme eingesetzt wird.

Zur Prozesszeitoptimierung ist des Weiteren bevorzugt vorgesehen, dass während der Montage der Eckwinkel und der Flanschprofile zu einem geschlossenen Rahmen die Mehrfachgreifvorrichtung oberhalb der Montagevorrichtung positioniert wird. Dadurch kann der daraufhin fertiggestellte Rahmen durch kurze Verfahrwege prozessoptimiert entnommen werden.

Bevorzugt ist vorgesehen, dass nach dem Zusammenstecken der Eckwinkel und Flanschprofile zu dem Rahmen zumindest eine Prägung oder Körnung in einenVerbindungsbereich zwischen dem Einsteckfinger des Eckwinkels und des Flanschprofils eingebracht wird. Vorteilhafterweise ist an der Mehrfachgreifvorrichtung ein Prägewerkzeug vorgesehen, um die vorbeschriebene Prägung einzubringen.

Des Weiteren ist bevorzugt vorgesehen, dass die Mehrfachgreifvorrichtung den geschlossenen Rahmen aus der Montagevorrichtung entnimmt und einem Speicher zuführt. Dadurch kann eine vollautomatisierte Montage möglich sein. Des Weiteren werden die fertiggestellten Rahmen für weitere Prozessschritte bereitgestellt. Dieser Speicher kann beispielsweise durch ein Wandelement einer Umhausung einer Montagezelle gebildet sein, an welchem mehrere Aufhängevorrichtungen zur Aufnahme der Rahmen vorgesehen sind.

Die der Erfindung zugrundeliegende Aufgabe wird des Weiteren durch eine Montagevorrichtung zur automatisierten Montage eines Rahmens, bestehend aus Flanschprofilen und Eckwinkeln, für ein Luftkanalelement gelöst, welche einen Grundrahmen mit einer Arbeitsebene aufweist, die sich vorzugsweise in X-/Y-Richtung erstreckt und eine erste Linearachsenanordnung aufnimmt, welche in einer ersten Verfahrrichtung in der Arbeitsebene, insbesondere X-Richtung, verfahrbar ist, und eine zweite Linearachsenanordnung aufnimmt, welche in einer zweiten Verfahrrichtung in der Arbeitsebene, insbesondere Y-Richtung, rechtwinklig zur ersten Linearachsenanordnung verfahrbar ist und dass die zweite Linearachsenanordnung teilweise von der ersten Linearachsenanordnung aufgenommen ist und eine Kreuzachsenanordnung gebildet ist und die an der Linearachsenanordnung positionierten Eckwinkelaufnahmen und Flanschprofilaufnahmen zur Montage des Rahmens zueinander verfahrbar gesteuert sind. Dadurch können die erforderlichen Verfahrbewegungen, die aufgrund der Geometrie der Eckwinkel um 90° zueinander versetzt sind, in einfacher Weise gesteuert werden, um die Einsteckfinger der jeweiligen Eckwinkel in die Flanschprofile einzustecken.

Bevorzugt ist vorgesehen, dass jede Linearachsenanordnung drei parallel zueinander ausgerichtete Linearachsen umfasst. Dadurch kann jeweils unabhängig voneinander die Eckwinkelaufnahme und die Flanschprofilaufnahme mit einer Verfahrbewegung in der jeweiligen Verfahrrichtung gesteuert werden.

Bevorzugt ist vorgesehen, dass die erste Linearachsenanordnung eine mittlere Linearachse aufweist, entlang der zumindest eine Flanschprofilaufnahme in und entgegen der Y-Richtung verfahrbar ist und zwei äußere Linearachsen beidseitig zur mittleren Linearachse angeordnet sind und dass die zweite Linearachsenanordnung eine mittlere Linearachse aufweist, durch welche weitere Flanschprofile in und entgegen der X-Richtung verfahrbar sind und zwei äußere Linearachsen aufweist, die aufden äußeren Linearachsen der ersten Linearachsenanordnung vorgesehen sind, an denen die Eckwinkelaufnahmen vorgesehen sind. Diese Anordnung ermöglicht, dass für jede Eckwinkelaufnahme ein Kreuztisch durch die Kreuzachsenanordnung geschaffen ist und dazwischenliegend Linearachsen zur Aufnahme der Flanschprofilaufnahme verfahrbar vorgesehen sind. Diese Anordnung ermöglicht auch die Herstellung von verschiedenen Größen der Rahmen. Darüber hinaus ist auch ermöglicht, dass sowohl im Querschnitt quadratische Rahmen als auch rechteckige Rahmen herstellbar sind.

Vorteilhafterweise weist jede der Linearachsen durch zwei getrennt und in Reihe zueinander angeordnete und steuerbare Linearachsenantriebe auf. Hierbei kann es sich beispielsweise um Schlittensysteme mit Riemenantrieben oder sonstigen Aufbauten handeln.

Die in der Montagevorrichtung vorgesehene Eckwinkelaufnahme umfasst zumindest ein Formnest zur Aufnahme des Eckwinkels. Vorteilhafterweise können auch zwei oder mehrere Formnester für verschiedene Größen der Eckwinkel vorgesehen sein. Auch kann ein Formnest zur Aufnahme von zwei unterschiedlichen Größen von Formnestern ausgebildet sein. Bevorzugt ist an der Eckwinkelaufnahme eine steuerbare Befestigungseinrichtung vorgesehen, insbesondere ein Spannzylinder mit einem Druckstück, um den oder die in die Eckwinkelaufnahmen eingesetzten Eckwinkel für die Montage zu fixieren.

Bevorzugt weisen die Flanschprofilaufnahmen ein Formnest zur Aufnahme der Flanschprofile auf. Insbesondere werden die Flanschprofile in der Flanschprofilaufnahme mittels Magnetkraft formschlüssig gehalten. Da die einander gegenüberliegenden Eckwinkel bevorzugt gleichzeitig in die jeweilige Kammer der Flanschprofile eingeschoben werden, heben sich die auf das Flanschprofil einwirkenden Kräfte gegenseitig auf, so dass für die Aufnahme der Flanschprofile die Ausrichtung der Flanschprofile genügen kann.

Bevorzugt sind an den Eckwinkelaufnahmen und/oder Flanschprofilaufnahmen Sensoren vorgesehen. Durch diese Sensoren kann sowohl das Vorhandensein des Eckwinkels oder Flanschprofils als auch die Lage erfasst werden, um eine erhöhte Prozesssicherheit zu erzielen.

Die der Erfindung zugrundeliegende Aufgabe wird des Weiteren durch eine Montagezelle zur automatisierten Herstellung eines Rahmens, bestehend aus Flanschprofilen und Eckwinkeln, für ein Luftkanalelement gelöst, welches einen Arbeitsraum aufweist, der durch eine Umhausung abgegrenzt ist, sowie zumindest eine in dem Arbeitsraum angeordnete Handhabungseinrichtung umfasst, welche mit einer Mehrfachgreifvorrichtung bestückbar ist und mit zumindest einem dem Arbeitsraum zuordenbaren Magazin für Eckwinkel und Flanschprofile sowie mit einer Montagevorrichtung, welche insbesondere durch die Mehrfachgreifvorrichtung der Handhabungseinrichtung mit Eckwinkeln und Flanschprofilen bestückbar ist, welche darauffolgend durch die Montagevorrichtung zu einem geschlossenen Rahmen zusammensteckbar sind und mit einemSpeicher für die fertiggestellten Rahmen, der durch Aufhängeeinrichtungen gebildet ist, die an Wandelementen vorgesehen sind, welche einen Teil der Umhausung bilden. Eine solche Montagezelle ermöglicht eine vollständige Prozessautomatisierung von der Bereitstellung der Flanschprofile und Eckwinkel bis zur Fertigstellung des geschlossenen Rahmens für die Luftkanalelemente.

Vorteilhafterweise ist vorgesehen, dass das zumindest eine Wandelement der Aufhängeeinrichtung verfahrbar ist und vorzugsweise Laufrollen umfasst. Diese Ausgestaltung weist den Vorteil eines Doppelnutzens auf, nämlich zum einen, dass während der automatisierten Montage das Wandelement einen Teil der Umhausung bildet und darauffolgend einen verfahrbaren Speicher bildet, der an eine Bearbeitungsstation in einfacher Weise übergeführt werden kann.

Bevorzugt ist vorgesehen, dass das zumindest eine Wandelement einen Grundrahmen und einen Tragrahmen aufweist, die vorzugsweise L-förmig zueinander ausgerichtet sind. Dies ermöglicht zum einen eine einfache Handhabung während einer Verfahrbewegung des Wandelementes und zum anderen eine hinreichende Aufnahmekapazität für die fertiggestellten Rahmen, um diese an den Aufhängevorrichtungen der Wandelemente zu positionieren.

Bevorzugt ist vorgesehen, dass jedes Wandelement zumindest eine Fixiereinrichtung und zumindest ein Sensorelement umfasst, um die Wandelemente zu einer geschlossenen Umhausung zu positionieren und diese Anordnung zu überwachen. Durch die Fixiervorrichtung können die Wandelemente untereinander und auch zur Umhausung für eine sichere Abschirmung des Arbeitsraumes fixiert werden. Gleichzeitig kann durch das zumindest eine Sensorelement erfasst werden, ob die Umhausung vollständig geschlossen ist, so dass aufgrund der Arbeitssicherheit erst darauffolgend ein Montageprozess beginnt.

Bevorzugt ist in der Montagezelle ein Vorlagetisch vorgesehen, auf welchem Eckwinkel und/oder Flanschprofile aufgelegt werden, die durch eine optische Einrichtung in der Lage und Ausrichtung erkennbar sind und die mit der Mehrfachgreifvorrichtung ansteuerbar ist. Dies ist insbesondere vorgesehen, sofern die Eckwinkel und/oder Flanschprofile mit einer beliebigen, chaotischen Ausrichtung in einem Transportbehälter bereitgestellt werden.

Die der Erfindung zugrundeliegende Aufgabe wird des Weiteren durch eine Mehrfachgreifvorrichtung für eine Handhabungseinrichtung einer Montagezelle zur automatisierten Montage eines Rahmens, bestehend aus Flanschprofilen und Eckwinkeln, für ein Luftkanalelement gelöst, welche eine Anschlussstelle für die Aufnahme an der Handhabungseinrichtung aufweist, an die sich eine zylindrische Aufnahme anschließt und einen in der Längsmittelachse der Anschlussstelle drehbar steuerbaren Kopf aufweist, an welchem radial abstehend mehrere Flanschprofilgreifer zur Aufnahme von jeweils einem Flanschprofil vorgesehen sind und zumindest einen an dem Kopf vorgesehenen Eckwinkelgreifer zur Aufnahme von zumindest einem Eckwinkel aufweist, sowie eine Halteeinrichtung zur Aufnahme eines fertiggestellten Rahmens aus den Eckwinkeln und Flanschprofilen aufweist. Eine solche Mehrfachgreifvorrichtung weist den Vorteil auf, dass die erforderlichen Handhabungsschritte während der automatisierten Montage mit nur einer Greifvorrichtung durchgeführt werden kann, wodurch die Prozesszeiten erheblich reduziert werden können.

Bevorzugt ist ein Prägewerkzeug an der Mehrfachgreifvorrichtung vorgesehen. Dieses Prägewerkzeug ist vorteilhafterweise in der Längsmittelachse der Anschlussstelle und dieser gegenüberliegend das Prägewerkzeug ausgerichtet. Diese Anordnung ermöglicht, dass die Kraftrichtung für das Prägewerkzeug in einer Achse der Handhabungseinrichtung liegt, so dass keine Hebelkräfte während des Einbringens der Prägewerkzeuge entstehen und somit ein einfacher Aufbau der Mehrfachgreifvorrichtung ermöglicht ist.

Bevorzugt ist vorgesehen, dass der Eckwinkelgreifer als Magnetgreifer mit zumindest einem Haltedorn ausgebildet ist. Ein solcher Haltedorn kann beispielsweise in eine Befestigungsbohrung im Mittelteil des Eckwinkels eingreifen und durch die Magnetkraft den Eckwinkel aufnehmen.

Bevorzugt ist vorgesehen, dass die Länge des zumindest einen Haltedorns für die Aufnahme der Anzahl der für den Rahmen erforderlichen Eckwinkel ausgebildet ist. Dadurch können mehrere Eckwinkel insbesondere deckungsgleich aneinanderliegend von dem Eckwinkelgreifer aufgenommen werden und aufeinanderfolgend in Formnester der Eckwinkelaufnahmen an der Montagevorrichtung abgelegt werden.

Des Weiteren ist bevorzugt vorgesehen, dass der Eckwinkelgreifer zumindest ein Anschlagselement zur lagerichtigen Ausrichtung und Aufnahme des zumindest einen Eckwinkels aufweist. Dadurch kann eine definierte Ansteuerung der Lage für die Positionierung der Eckwinkel in den Eckwinkelaufnahmen der Montagevorrichtung erfolgen.

Alternativ und bevorzugt ist vorgesehen, dass zwei mit Abstand zueinander angeordnete Haltedorne vorgesehen werden. Dadurch kann bereits eine definierte Ausrichtung der Eckwinkel ermöglicht sein. Dabei kann jeder Haltedorn in eine Befestigungsbohrung eines Einsteckfingers des Eckwinkels eingreifen.

An dem Kopf der Mehrfachgreifvorrichtung ist bevorzugt die Anzahl von Flanschprofilgreifern vorgesehen, welche der Anzahl an Flanschprofilen für die Herstellung des Rahmens entspricht. Diese Flanschprofilgreifer nehmen die Flanschprofile vorzugsweise koaxial zur Längsmittelachse der Anschlussstelle auf.

Des Weiteren ist bevorzugt vorgesehen, dass die Flanschprofilgreifer als Magnetgreifer ausgebildet sind. Dadurch ist eine konstruktiv einfach ausgebildete als auch einfach steuerbare Greiferanordnung ermöglicht.

Bevorzugt ist vorgesehen, dass die Flanschprofilgreifer in einem Winkel von 180° oder weniger aneinandergereiht an dem Kopf angeordnet sind und der Eckwinkelgreifer diesem Aufnahmebereich gegenüberliegend ausgerichtet ist. Dadurch kann sowohl eine störungsfreie Aufnahme der Flanschprofile und Eckwinkel aus dem Magazin oder dem Vorlagetisch erfolgen sowie eine einfache aufeinanderfolgende Positionierung der Eckwinkel und Flanschprofile in der Montagevorrichtung erfolgen.

Die an der Mehrfachgreifvorrichtung angeordnete Halteeinrichtung umfasst bevorzugt zwei mit Abstand zueinander angeordnete Haltelaschen, die vorzugsweise an deren stirnseitigem Ende eine Abrutschsicherung aufweist. Durch die zwei mit Abstand ausgerichteten Haltelaschen kann ein sicheres Greifen des fertiggestellten Rahmens ermöglicht sein, um diesen aus den Eckwinkelaufnahmen und Flanschprofilaufnahmen herauszuführen. Gleichzeitig kann dadurch eine definierte Übergabe und Ausrichtung des Rahmens an die Aufhängeeinrichtung an dem Wandelement ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines bekannten Luftkanalelementes,
- Figur 2: eine schematische Ansicht auf einen Eckwinkel gemäß Figur 1,
- Figur 3: eine perspektivische Ansicht eines Flansch profils des Luftkanalelementes gemäß Figur 1,
- Figur 4: eine perspektivische Ansicht eines Rahmens für das Luftkanalelement gemäß Figur 1,
- Figur 5: eine perspektivische Ansicht einer Montagezelle,
- Figur 6: eine schematische Seitenansicht auf eine Mehrfachgreifvorrichtung für eine Handhabungseinrichtung, eine weitere schematische Seitenansicht der Mehrfach
- Figur 7: greifvorrichtung gemäß Figur 6, eine schematische Ansicht von oben auf die
- Figur 8: Mehrfachgreifvorrichtung gemäß Figur 6, eine weitere schematische Seitenansicht der
- Figur 9: Mehrfachgreifvorrichtung gemäß Figur 6, eine perspektivische Ansicht einer Montagevorrichtung für eine
- Figur 10: Montagezelle gemäß Figur 5,
- Figur 11: eine schematisch vergrößerte Ansicht von oben auf Eckwinkelaufnahmen und eine Flanschaufnahme derMontagevorrichtung gemäß Figur 10,
- Figuren 12 - 14: schematische Ansichten von Arbeitsschritten für eine automatisierte Montage des Rahmens gemäß Figur 4,
- Figur 15: eine perspektivische Ansicht der Umhausung gemäß Figur 5,
- Figur 16: eine schematische Ansicht von oben auf die Umhausung gemäß Figur 15, und
- Figur 17: eine perspektivische Ansicht eines Wandelementes für die Umhausung gemäß Figur 15.

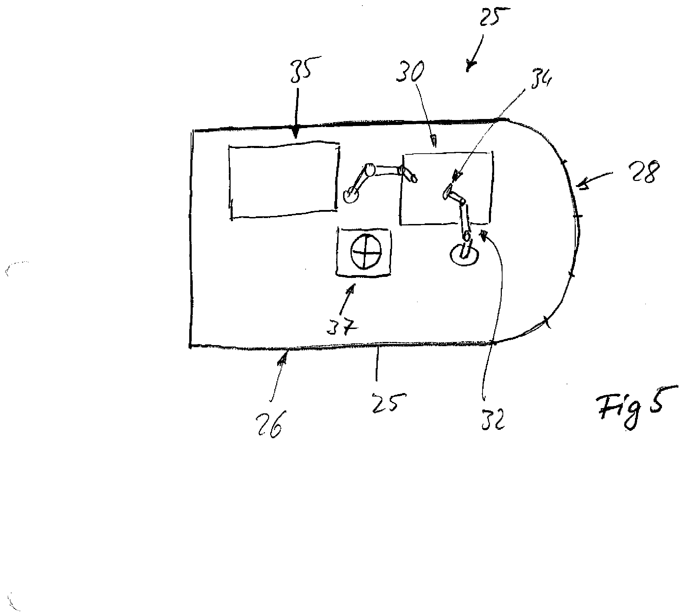

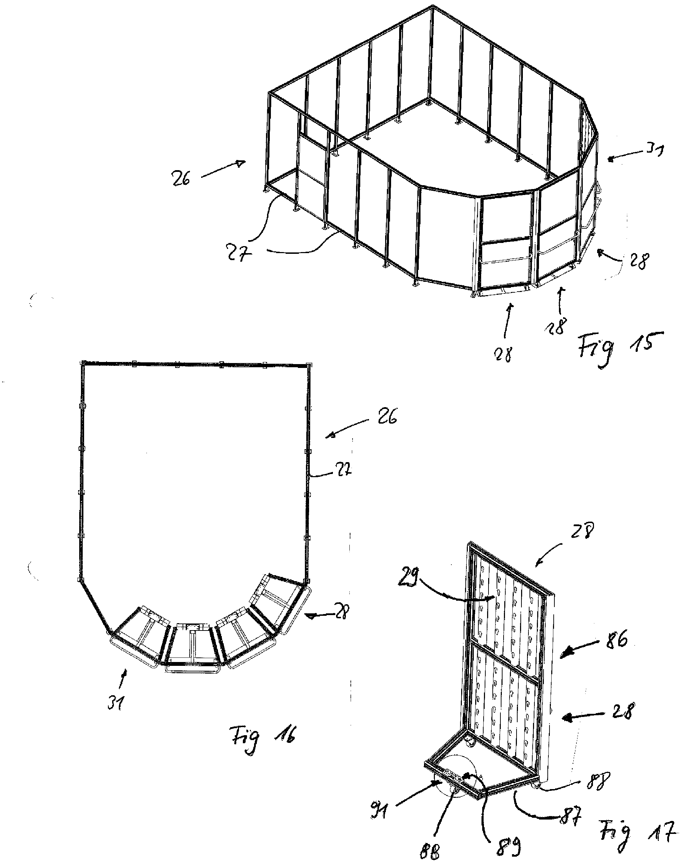

In Figur 5 ist perspektivisch eine Montagezelle 25 dargestellt. Diese Montagezelle 25 ermöglicht die automatisierte Montage und Herstellung des Rahmens 14 gemäß Figur 4. Die Montagezelle 25 umfasst eine Umhausung 26. Diese Umhausung 26 weist fest aneinandergereihte Schutzwände 27 sowie Wandelemente 28 auf, welche einzeln von der Umhausung 26 gelöst werden können, wie nachfolgend in den Figuren 15 bis 17noch beschrieben wird.

Die Umhausung 26 umgibt einen Arbeitsraum. In diesem Arbeitsraum ist eine Montagevorrichtung 30 vorgesehen, durch welche die Eckwinkel 16 und die Flanschprofile 19 zusammengesteckt werden, um den Rahmen 14 gemäß Figur 4 zu bilden. Dieser Montagevorrichtung 30 zugeordnet ist eine Handhabungseinrichtung 32. Diese Handhabungseinrichtung 32 kann ein Mehrachsenroboter sein. Diese Handhabungseinrichtung 32 ist mit einer Mehrfachgreifvorrichtung 34 bestückbar. Dieses dient zur Handhabung der Eckwinkel 16 und Flanschprofile 19.

Benachbart zur Montagevorrichtung 30 ist ein Magazin 35 oder sind meh rere Magazine 35 vorgesehen, durch welche die Flanschprofile 19 und die Eckwinkel 16 zur Verarbeitung bereitgestellt werden. Des Weiteren kann in der Montagezelle 25 ein Vorlagetisch 37 vorgesehen sein. Auf diesen Vorlagetisch 37 können Eckwinkel 16 und/oder Flanschprofile 19 aufgelegt werden, damit darauffolgend die Mehrfachgreifvorrichtung 34 in einer definierten Lage und Ausrichtung die Eckwinkel 16 und/oder Flanschprofile 19 aufnimmt. Auch kann die Mehrfachgreifvorrichtung 34 Eckwinkel 16 und/oder Flanschprofile 19 unmittelbar aus dem oder den Magazinen 35 entnehmen.

Bei dieser Montagezelle 25 kann eine weitere Handhabungseinrichtung 32 vorgesehen sein, welche Eckwinkel 16 und/oder Flanschprofile 19 aus dem oder den Magazinen 35 entnimmt und auf den Vorlagetischen 37 bereitstellt. Die Handhabungseinrichtung 32 entnimmt dann die bereitgestellten Eckwinkel 16 und/oder Flanschprofile 19 von dem Vorlagetisch 37 und führt diese in die Montagevorrichtung 30 über. Nach der Montage des Rahmens 14 wird der fertiggestellte Rahmen 14 durch das Mehrfachgreifelement 34 der Handhabungseinrichtung 32 aus der Montagevorrichtung 30 entnommen. Von der Montagevorrichtung 30 wird der fertiggestellte Rahmen 14 an einen Speicher 31 übergeführt. Im Ausführungsbeispiel stellen die Wandelemente 28 den Speicher 31 dar. Die fertiggestellten Rahmen 14 werden an Aufhängeeinrichtungen 29 der Wandelemente 28 positioniert.

Sofern eine zusätzliche Handhabungseinrichtung nicht vorhanden ist, entnimmt die Handhabungseinrichtung 32 Eckwinkel 16 und/oder Flanschprofile 19 aus den Magazinen 35 und positioniert diese ggf. auf dem Vorlagetisch 37 und werden von dort aus der Montagevorrichtung 30 zugeführt. Sofern die Eckwinkel 16 und/oder die Flanschprofile 19 in einer definierten Lage den Magazinen 35 entnommen werden können, werden die Eckwinkel 16 und/oder die Flanschprofile 19 direkt in die Montagevorrichtung 30 überführt.

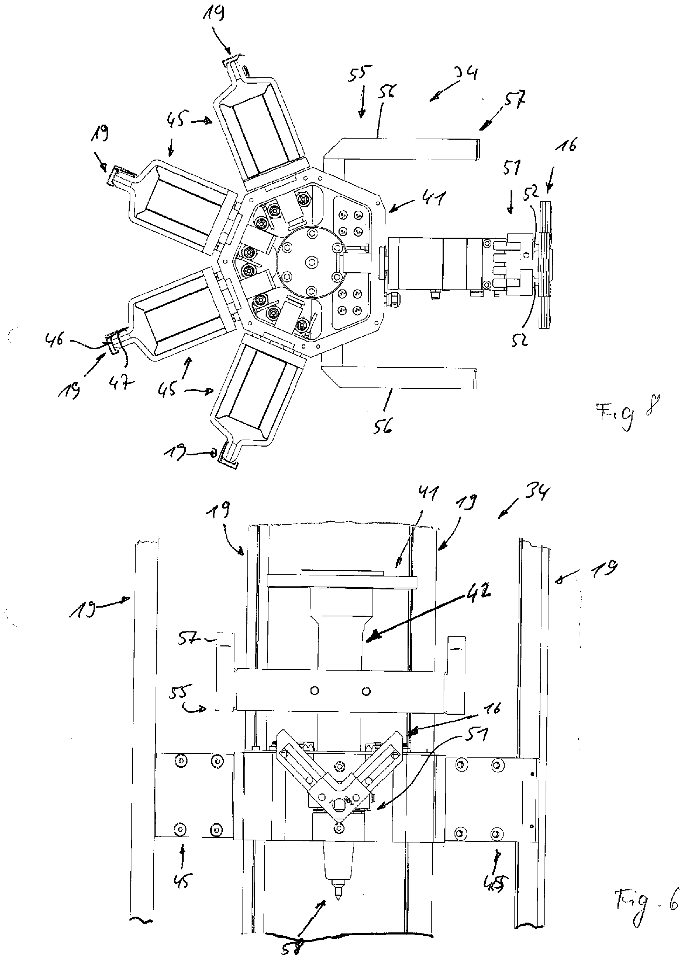

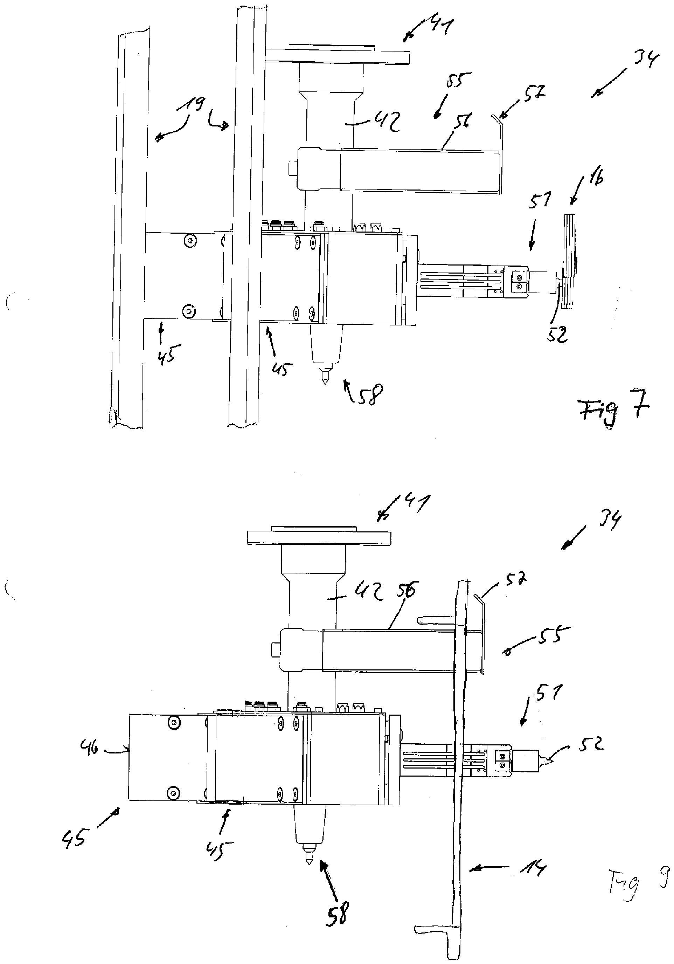

In Figur 6 ist eine erste schematische Seitenansicht und in Figur 7 eine zweite schematische Seitenansicht der Mehrfachgreifvorrichtung 34 dargestellt. Die Figur 8 zeigt eine Ansicht von oben auf die Mehrfachgreifvorrichtung 34 gemäß den Figuren 6 und 7.

Diese Mehrfachgreifvorrichtung 34 umfasst eine Anschlussstelle 41, die mit einer Schnittstelle der Handhabungseinrichtung 32 verbindbar ist. Dadurch wird sowohl eine mechanische als auch eine elektrische Verbindung zur Ansteuerung der Mehrfachgreifvorrichtung 34 gebildet. Von der Anschlussstelle 41 aus erstreckt sich eine zylindrische Aufnahme 42, an welcher rotierend ein Kopf 44 befestigt ist. An diesem Kopf 44 sind Flanschprofilgreifer 45 radial nach außen weisend positioniert. Diese Flanschprofilgreifer 45 sind gemäß Figur 8 aneinander angrenzend Vorgesehen, vorzugsweise in einem Greifraum von 180° oder weniger als 180°. Diese Flanschprofilgreifer 45 sind als Magnetgreifer ausgebildet und weisen eine stirnseitige Anlagefläche 46 und eine seitliche Anlagefläche 47 auf, Dadurch kann das Flanschprofil 19 mit dessen Schenkeln 48, 49 (Figur 3) an dem Flanschprofilgreifer 45 in einer definierten Position aufgenommen sein.

Den Flanschprofilgreifern 45 gegenüberliegend ist ein Eckwinkelgreifer 51 vorgesehen. Dieser Eckwinkelgreifer 51 weist zumindest einen, vorzugsweise zwei, Haltedorne 52 auf. Dieser Haltedorn 52 ist in der Geometrie an eine Befestigungsbohrung 53 im Mittelteil 18 oder im Einsteckfinger 17 des Eckwinkels 16 angepasst. Der Haltedorn 52 greift zur Aufnahme der Eckwinkel 16 in die Befestigungsbohrung 53 ein. Die Eckwinkel 16 werden durch eine Magnethaltekraft zum Haltedorn 52 befestigt. Bevorzugt ist vorgesehen, dass durch die Länge des Haltedorns 52 vier aneinanderliegende Eckwinkel 16 gleichzeitig gehalten werden können.

An der zylindrischen Aufnahme 42 ist des Weiteren eine Halteeinrichtung 55 vorgesehen. Diese Halteeinrichtung 55 umfasst zwei im Abstand zueinander angeordnete Haltelaschen 56. Diese Haltelaschen 56 sind bevorzugt parallel zueinander ausgerichtet. Am freien stirnseitigen Ende der Haltelaschen 56 ist eine Abrutschsicherung 57 vorgesehen.

Die Figuren 6 bis 8 zeigen die Mehrfachgreifvorrichtung 34 vollständig bestückt. Durch diese Mehrfachgreifvorrichtung 34 können gleichzeitig vier Flanschprofile 19 und vier Eckwinkel 16 aufgenommen werden, die zur Bildung des Rahmens 14 benötigt werden. Diese vier Flanschprofile 19 und vier Eckwinkel 16 können durch die Mehrfachgreifvorrichtung 34 mittels einer einzigen Verfahrbewegung von dem oder den Magazinen 35 und/oder Vorlagetisch 37 zur Montagevorrichtung 30 überführt werden.

In Figur 9 ist eine schematische Seitenansicht der Mehrfachgreifvorrichtung 34 dargestellt, bei der die Eckwinkel 16 und Flanschprofile 19 in der Montagevorrichtung 30 abgelegt wurden. Die Mehrfachgreifvorrichtung 34 nimmt über die Halteeinrichtung 55 den von der Montagevorrichtung 30 fertiggestellten Rahmen 14 aus der Montagevorrichtung 30 heraus. Der Rahmen 14 wird durch die Haltelaschen 56 hängend gehalten. Die Abrutschsicherung 57 kann auch zur erleichterten Aufnahme des Rahmens 14 aus der Montagevorrichtung 30 dienen.

In der in Figur 9 dargestellten hängenden Anordnung des Rahmens 14 kann dieser an die Aufhängeeinrichtung 29 des Wandelementes 28 überführt werden.

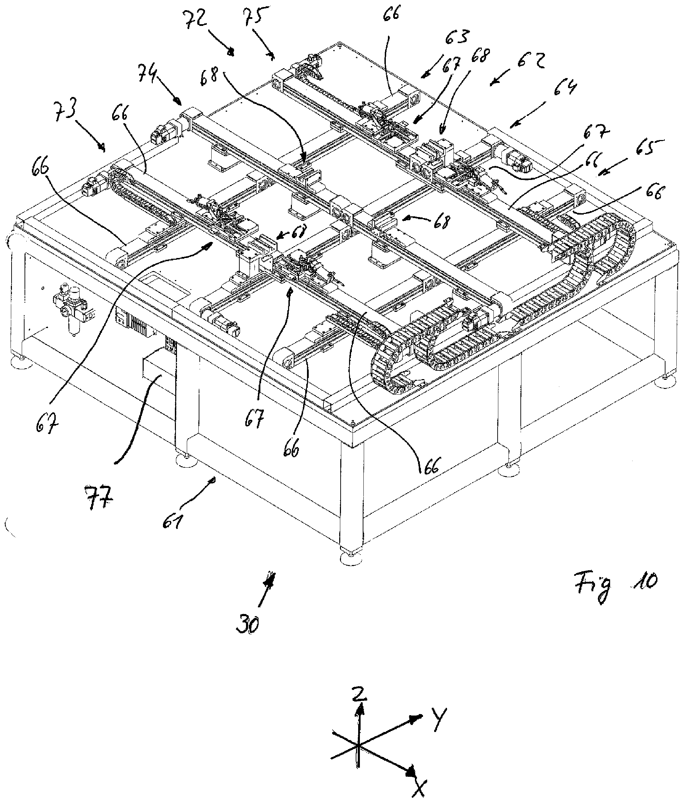

In Figur 10 ist eine perspektivische Ansicht auf die Montagevorrichtung 30 dargestellt. Die Montagevorrichtung 30 umfasst einen Grundrahmen 61 mit einer Arbeitsebene, welche sich vorzugsweise in X- und Y-Richtung erstreckt. Auf dem Grundrahmen 61 ist eine erste Linearachsenanordnung 62 vorgesehen. Dieser ersten Linearachsenanordnung 62 ist eine zweite Linearachsenanordnung 72 zugeordnet. Die Verfahrrichtungen der ersten und zweiten Linearachsenanordnungen 62, 72 sind um 90° versetzt zueinander. Bevorzugt ist die erste Linearachsenanordnung 62 in Y-Richtung verfahrbar und die zweite Linearachsenanordnung 72 in X-Richtung verfahrbar. Dies kann auch vertauscht sein. Durch die übereinanderliegende Zuordnung der ersten und zweiten Linearachsenanordnung 62, 72 kann eine Kreuztischanordnung geschaffen werden, durch welche die Montage der Eckwinkel 16 zu den Flanschprofilen 19 ermöglicht ist. Diese Kreuztischanordnung weist für jede Eckwinkelaufnahme 67 einen Kreuztisch auf.

Die erste Linearachsenanordnung 62 umfasst eine mittlere Linearachse 64 sowie jeweils eine äußere Linearachse 63, 65. Jede dieser Linearachsen ist bevorzugt aus zwei Linearantrieben 66 gebildet, die in Reihe zueinander angeordnet sind.

Die zweite Linearachsenanordnung 72 weist einen analogen Aufbau auf. Diese zweite Linearachsenanordnung 72 weist eine mittlere Linearachse 74 und äußere Linearachsen 73, 75 auf. Diese Linearachsen 73, 74, 75 werden ebenfalls durch zwei Linearantriebe 66 ausgebildet, die in Reihe zueinander angeordnet sind.

Durch die über Kreuz angeordneten Linearantriebe 66 der äußeren Linearachsen 63, 73 und 65, 75 werden diese Kreuztische gebildet. Auf diesen Kreuztischen sind die Eckwinkelaufnahmen 67 positioniert.

Den mittleren Linearachsen 64 sind die Flanschprofilaufnahmen 68 zugeordnet. Diese mittleren Linearachsen 64 ermöglichen nur eine Verfahrrichtung der Flanschprofilaufnahmen 68 in und entgegen der Y-Richtung. Die mittlere Linearachse 74 der zweiten Linearachsenanordnung 22 ermöglicht für die daran vorgesehene Flanschprofilaufnahme 68 nur eine Verfahrbewegung in und entgegen der X-Richtung.

Die Ansteuerung der ersten und zweiten Linearachsenanordnung 62, 72 erfolgt über eine Steuerung 77. Diese Steuerung 77 ist mit einer Steuerung für die Handhabungseinrichtung 32 und der Mehrfachgreifvorrichtung 34 gekoppelt oder beinhaltet diese. Diese Steuerung 77 kann auch Teil der Steuerung sein, welche die gesamte Montagezelle 25 überwacht unddie einzelnen Komponenten in der Montagezelle 25 ansteuert.

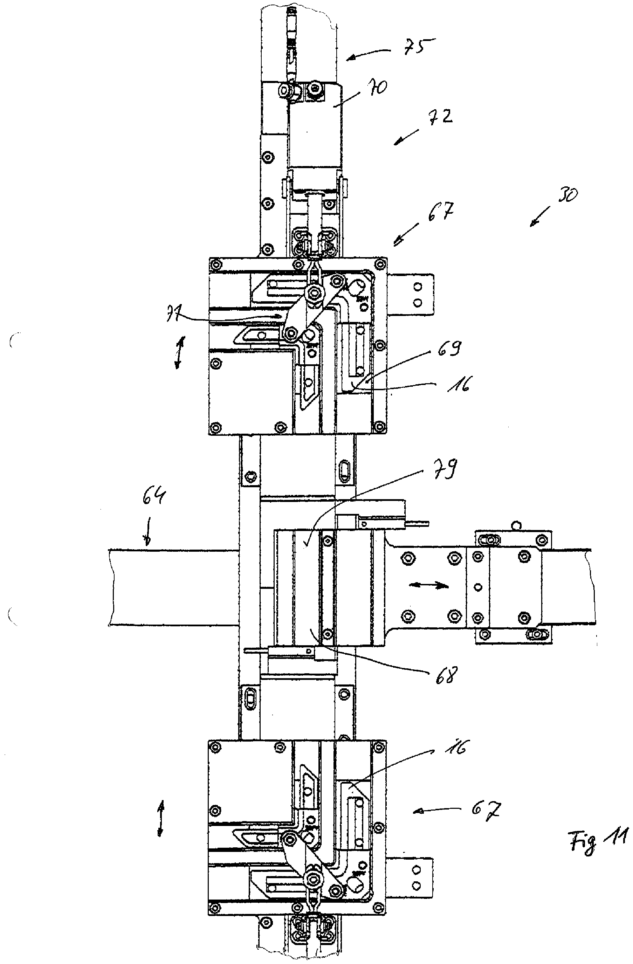

In Figur 11 ist eine schematisch vergrößerte Ansicht auf die Eckwinkelaufnahme 67 und die Flanschprofilaufnahme 68 dargestellt. Die Eckwinkelaufnahme 67 weist zumindest ein Formnest 69 zur Aufnahme des Eckwinkels 16 auf. Beispielhaft sind zwei Formnester 69 für zwei verschiedene Größen der Eckwinkel 16 vorgesehen. Nach dem Einlegen der Eckwinkel 16 in die Formnester 69 durch die Mehrfachgreifvorrichtung 34 kann eine Befestigungseinrichtung 70 betätigt werden, durch welche ein Druckstück auf den Eckwinkel 16 zubewegt und der Eckwinkel 16 in dem Formnest 69 fixiert gehalten wird. Diese Befestigungseinrichtung 70 kann ein Spannzylinder sein. Sofern zwei Formnester 69 benachbart in einer Eckwinkelaufnahme 67 vorgesehen sind, können gleichzeitig mit der Befestigungseinrichtung 70 zwei Druckstücke angesteuert werden.

Die Flanschprofilaufnahme 68 kann ein U-förmiges Formnest 79 umfassen. Diesem Formnest 79 kann wiederum ein ansteuerbarer Haltemagnet zugeordnet werden, so dass das eingelegte Flanschprofil 19 durch die Magnetkraft in deren Ausrichtung gehalten wird.

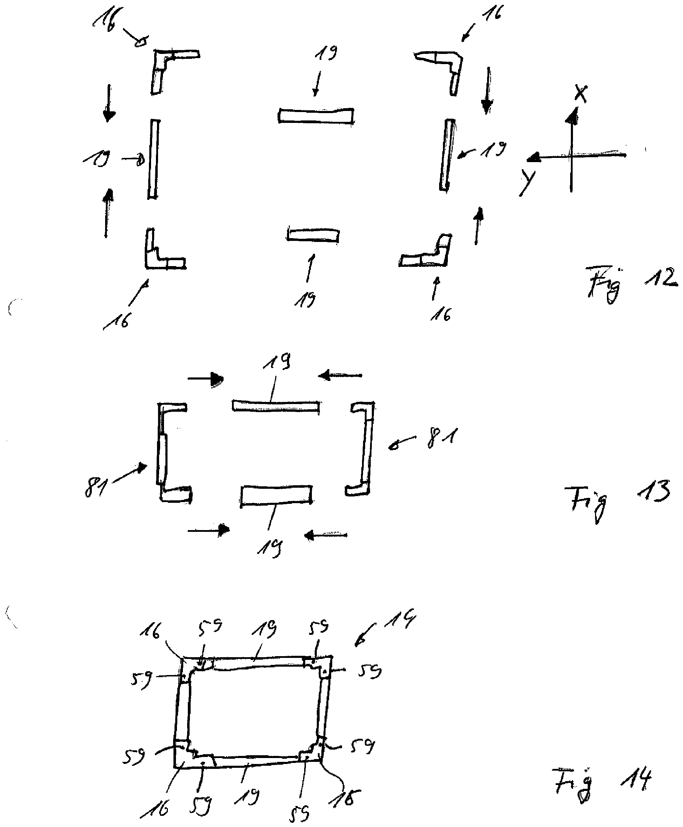

Zur Montage der Eckwinkel 16 und/oder Flanschprofile 19 mit der Montagevorrichtung 30 wird auf die Figuren 12 bis 14 Bezug genommen. Die Figuren 12 bis 14 zeigen schematisch die Montageschritte.

Nach dem Bestücken der Eckwinkelaufnahmen 67 mit Eckwinkeln 16 und der Flanschprofilaufnahmen 68 mit Flanschprofilen 19 wird die zweite Linearachsenanordnung 72 angesteuert, so dass die Eckwinkelaufnahmen 67 in und entgegen der X-Richtung auf die jeweiligen Flanschprofile 19 zubewegt werden. Dabei werden die Einsteckfinger 17 in die erste Kammer 21 der Flanschprofile 19 eingesteckt und eine Montagegruppe 81 gebildet. Diese Montagegruppe 81 besteht aus zwei in das Flanschprofit 19 eingesteckten Eckwinkeln 16. Darauffolgend wird die erste Linearachsenanordnung 62 für eine Verfahrbewegung in und entgegen der Y-Richtung angesteuert, so dass die jeweils freien Einsteckfinger 17 der Eckwinkel 16 in das dritte und vierte Flanschprofil 19 eingesteckt werden. Dies zeigt Figur 13. Nach Abschluss dieser Verfahrbewegung ist der Rahmen 14 gemäß Figur 14 hergestellt. Darauffolgend kann mittels dem Prägewerkzeug 58 in einem Verbindungsbereich oder Überlappungsbereich zwischen dem Flanschprofil 19 und dem Einsteckfinger 17 des Eckwinkels 16 eine Prägung eingebracht werden. Dabei ist insbesondere eine Prägung vorgesehen, welche beispielsweise mit der Befestigungsbohrung 53 im Einsteckfinger 17 oder einer Vertiefung im Einsteckfinger 17 korrespondiert. Durch diese Prägung oder Verpressung werden die Eckwinkel 16 zu den Flanschprofilen 19 gesichert.

In Figur 15 ist eine perspektivische Ansicht der Umhausung 26 mit Schutzwänden 27 und Wandelementen 28 dargestellt. Die Figur 16 zeigt eine Ansicht von oben auf die Umhausung 26. Die Figur 17 zeigt eine perspektivische Ansicht des Wandelementes 28.

Die Wandelemente 28 weisen eine Doppelfunktion auf. Zum einen bilden diese einen Teil der Umhausung 26, haben also die Funktion wie die Schutzwände 27, zum anderen übernehmen diese die Funktion des Speichers 31. Hierfür sind an einer Innenseite der Wandelemente 28 Aufhängeeinrichtungen 29 vorgesehen. An diesen Aufhängeeinrichtungen 29 können die fertiggestellten Rahmen 14 durch die Mehrfachgreifvorrichtung 34 mit dem aufgenommenen Rahmen 14, wie dies in Figur 9 dargestellt ist, positioniert oder abgelegt werden. Dieses Wandelement 28 weist einen vertikal ausgerichteten Tragrahmen 86 sowie einen horizontal ausgerichteten Grundrahmen 87 auf. An dem Grundrahmen 87 sind Laufrollen 88 vorgesehen, um das Wandelement 28 zu verfahren.

Am Wandelement 28, vorzugsweise an dessen Grundrahmen 87, ist zumindest ein Fixierelement 89 vorgesehen, um das Wandelement 28 in einer gesicherten Position zur Umhausung 26 zu halten. Vorteilhafterweise ist an dem Wandelement 28, insbesondere dem Grundrahmen 87, zumindest ein Sensorelement 91 vorgesehen. Dadurch kann abgefragt werden, ob alle Wandelemente 28 zur Bildung einer geschlossenen Umhausung 26 vorhanden und/oder zueinander fixiert sind, bevor ein auto matisierter Montageprozess gestartet wird.

Die Wandelemente 28 können nach der Bestückung mit mehreren Rahmen 14 aus der Umhausung 26 gelöst werden und zu einem weiteren Arbeitsplatz oder einer weiteren Arbeitsstation überführt werden. Weitere unbestückte Wandelemente 28 können zur Komplettierung der Umhausung 26 wieder positioniert werden, um darauffolgend die automatische Montage von Rahmen 14 zeitnah fortzuführen.

## Patentansprüche

1. Verfahren zur automatisierten Montage eines Rahmens (14) bestehend aus Eckwinkeln (16) und Flanschprofilen (19) für ein Luftkanalelement (11),
- bei dem mit einer Handhabungseinrichtung (32) eine Montagevorrichtung (30) mit Flanschprofilen (19) und Eckwinkeln (16) bestückt wird,
- bei dem zwei einander gegenüberliegende und zu einem Flanschprofil (19) ausgerichtete Eckwinkel (16) in das Flanschprofil (19) eingesteckt werden und eine Montagegruppe (81) gebildet wird,
- bei dem zwei einander gegenüberliegende Montaqegruppen (81) zu den dazwischen angeordneten Flanschprofilen (19) mit freiem Einsteckfinger (17) der Eckwinkel (16) der Montagegruppe (81) in die Flanschprofile (19) eingesteckt werden undein geschlossener Rahmen (14) gebildet wird.

2. Verfahren nach Anspruch 1, **dadurch gekennzeichnet, dass** mit einer Mehrfachgreifvorrichtung (34) die Montagevorrichtung (30) mit Eckwinkeln (16) und Flanschprofilen (19) bestückt wird.

3. Verfahren nach Anspruch 1 oder 2, **dadurch gekennzeichnet, dass** die Flanschprofile (19) und/oder die Eckwinkel (16) in Magazinen (35) sortiert und ausgerichtet bereitgestellt werden und von der Mehrfachgreifvorrichtung (34) der Handhabungseinrichtung (32) gegriffen werden.

4. Verfahren nach Anspruch 1 oder 2, **dadurch gekennzeichnet, dass** die Flanschprofile (19) und/oder Eckwinkel (16) in Transportbehältern bereitgestellt werden, daraus entnommen und auf einen Vorlagetisch (37) aufgelegt werden und darauffolgend die Flanschprofile(19) und/oder Eckwinkel (16) in einer definierten Lage mit der Mehrfachgreifvorrichtung (34) gegriffen werden.

5. Verfahren nach einem der vorhergehenden Ansprüche, **dadurch gekennzeichnet, dass** von der Mehrfachgreifvorrichtung (34) alle Eckwinkel (16) und Flanschprofile {19) zur Bildung des Rahmens (14) aufgenommen werden und mit einer Verfahrbewegung der Montagevorrichtung (30) zugeführt werden.

6. Verfahren nach einem oder mehreren der vorhergehenden Ansprüche, **dadurch gekennzeichnet, dass** mit der Mehrfachgreifvorrichtung (34) aufeinanderfolgend Eckwinkelaufnahmen (67) mit Eckwinkeln (16) und Flanschprofilaufnahmen (68) mit Flanschprofilen (19) bestückt werden.

7. Verfahren nach einem oder mehreren der vorhergehenden Ansprüche, **dadurch gekennzeichnet, dass** während der Montage der Eckwinkel (16) und Flanschprofile (19) zu einem geschlossenen Rahmen (14) die Mehrfachgreifvorrichtung (34) oberhalb oder benachbart zur Montagevorrichtung (30) positioniert wird.

8. Verfahren nach Anspruch 7, **dadurch gekennzeichnet, dass** nach dem Zusammenstecken der Eckwinkel (16) und Flanschprofile (19)eine Prägung mit einem Prägewerkzeug (58) im Verbindungsbereich zwischen dem Flanschprofil (19) und eingestecktem Einsteckfinger (17) des Eckwinkels (16) durchgeführt wird und vorzugsweise die Prägung mit einem an der Mehrfachgreifvorrichtung (34) vorgesehenen Prägewerkzeug (38) durchgeführt wird.

9. Verfahren nach einem oder mehreren der vorhergehenden Ansprüche, **dadurch gekennzeichnet, dass** die Mehrfachgreifvorrichtung (34) den geschlossenen Rahmen (14) aus der Montagevorrichtung (30) entnimmt und einem Speicher (31) zuführt.

10. Montagevorrichtung zur automatisierten Montage eines Rahmens (14), bestehend aus Flanschprofilen (19) und Eckwinkeln (16) für ein Luftkanalelement (11), insbesondere zur Durchführung des Verfahrens nach einem **oder mehreren** der Ansprüche 1 bis 9,
- mit einem Grundrahmen (61), der sich in einer Arbeitsebene erstreckt,
- mit einer ersten an dem Grundrahmen (61) vorgesehenen Linearachsenanordnung (62), welche in einer ersten Verfahrrichtung der Arbeitsebene verfahrbar ist,
- mit einer zweiten Linearachsenanordnung (72), welche in einer zweiten Verfahrrichtung der Arbeitsebene und rechtwinklig zur ersten Verfahrrichtung der ersten Linearachsenanordnung (62) verfahrbar ist, wobei die zweite Linearachsenanordnung (72) teilweise auf der ersten Linearachsenanordnung (62) vorgesehen ist und eine Kreuzachsenanordnung bildet und wobei die an den Linearachsenanordnungen (62, 72) positionierten Eckwinkelaufnahmen (67) und Flanschprofilaufnahmen (68) zur Montage des Rahmens (14) zueinander verfahrbar angesteuert sind.

11. Montagevorrichtung nach Anspruch 10, **dadurch gekennzeichnet, dass** jede Linearachsenanordnung (62, 72) drei parallel zueinander ausgerichtete Linearachsen (63, 64, 65; 73, 74, 75) aufweist.

12. Montagevorrichtung nach Anspruch 10 oder 11, **dadurch gekennzeichnet,**
- **dass** die erste Linearachsenanordnung (62) eine mittlere Linearachse (64) aufweist, entlang der zumindest eine Flanschprofilaufnahme (68) in und entgegen der ersten Verfahrrichtung verfahrbar ist und zwei äußere, beidseitig zur mittleren Linearachse (64) angeordnete Linearachsen (63, 65) aufweist, und
- **dass** die zweite Linearachsenanordnung (72) eine mittlere Linearachse (74) aufweist, durch welche die weitere Flanschprofilaufnahme (68) in und entgegen der zweiten Verfahrrichtung verfahrbar sind, und zwei äußere Linearachsen (73, 75) aufweist, die auf den äußeren Linearachsen (63, 65) der ersten Linearachsenanordnung (62) vorgesehen sind und jeweils die eine Eckwinkelaufnahme (67) aufnehmen.

13. Montagevorrichtung nach einem oder mehreren der Ansprüche 10 bis 12, **dadurch gekennzeichnet, dass** jede Linearachse (63, 64, 65; 73, 74, 75) durch zwei getrennt ansteuerbare und in Reihe angeordnete Linearachsenantriebe (66) ausgebildet ist.

14. Montagevorrichtung nach einem oder mehreren der Ansprüche 10 bis 13, **dadurch gekennzeichnet, dass** die Eckwinkelaufnahme (67) zumindest ein Formnest (69) aufweist und der in die Eckwinkelaufnahme (67) eingesetzte Eckwinkel (16) durch eine ansteuerbare Befestigungseinrichtung (70), insbesondere einen Spannzylinder, mit einem Druckstück (71) fixierbar ist.

15. Montagevorrichtung nach einem oder mehreren der Ansprüche 10 bis 15, **dadurch gekennzeichnet, dass** die Flanschprofilaufnahme (68) ein Formnest (79) zur Aufnahme des Flanschprofils (19) aufweist und vorzugsweise mit einer Magnethaltekraft formschlüssig das Flanschprofil (19) aufnimmt.

16. Montagevorrichtung nach einem oder mehreren der Ansprüche 10 bis 15, **dadurch gekennzeichnet, dass** die Eckwinkelaufnahme (67) und die Flanschprofilaufnahme (68) zumindest einen Sensor umfasst, der zur Abfrage des Vorhandenseins und/oder der Lage des Eckwinkels (16) und Flanschprofils (19) vorgesehen ist.

17. Montagezelle zur automatisierten Montage eines Rahmens (14), bestehend aus Flanschprofilen (19) und Eckwinkeln (16) für ein Luftkanalelement (11),
- mit einem Arbeitsraum, der durch eine Umhausung (26) begrenzt ist,
- mit zumindest einer in dem Arbeitsraum vorgesehenen Handhabungseinrichtung (32), welche mit einer Mehrfachgreifeinrichtung (34) bestückbar ist,
- mit einem im Arbeitsraum positionierbaren Magazin (35) für Eckwinkel (16) und für Flanschprofile (19),
- mit einer Montagevorrichtung (30), insbesondere nach einem oder mehreren der Ansprüche 10 bis 16, welche durch die Handhabungseinrichtung (32) mit Eckwinkeln (16) und Flanschprofilen (19) bestückbar ist, die durch die Montagevorrichtung (30) zu einem geschlossenen Rahmen (14) zusammengesteckt werden, und
- mit einem durch Wandelemente (28) gebildeten Speicher (31) für fertiggestellte Rahmen (14), die Aufhängeeinrichtungen (29) zur Aufnahme der Rahmen (14) aufweisen und welche Teil der Umhausung (26) sind.

18. Montagezelle nach Anspruch 17, **dadurch gekennzeichnet, dass** das zumindest eine Wandelement (28) verfahrbar zur Umhausung (26) ist und vorzugsweise Laufrollen (88) aufweist.

19. Montagezelle nach Anspruch 17 oder 18, **dadurch gekennzeichnet, dass** das zumindest eine Wandelement (28) einen Grundrahmen (87) und einen Tragrahmen (86) aufweist, die vorzugsweise L-förmig zueinander angeordnet sind, und insbesondere an dem Tragrahmen (86) die Aufhängeeinrichtungen (29) vorgesehen sind.

20. Montagezelle nach einem oder mehreren der Ansprüche 17 bis 19, **dadurch gekennzeichnet, dass** jedes Wandelement (28) zumindest ein Fixierelement (89) und zumindest ein Sensorelement (91) umfasst, um die Wandelemente (28) zu einer geschlossenen Umhausung (26) zu fixieren und diese Anordnung zu überwachen.

21. Montagezelle nach einem oder mehreren der Ansprüche 17 bis 20, **dadurch gekennzeichnet, dass** in der Montagezelle (25) ein Vorlagetisch (37) vorgesehen ist, auf welchem Eckwinkel (16) und/oder Flanschprofile (19) aufgelegt werden und durch eine optische Einrichtung die Lage und/oder Ausrichtung der Eckwinkel (16) und/oder Flanschprofile (19) erfassbar ist und die Greifposition einer Mehrfachgreifvorrichtung (34) der Handhabungseinrichtung (32) ansteuerbar ist.

22. Mehrfachgreifvorrichtung für eine Handhabungseinrichtung (32) zur automatisierten Montage eines Rahmens (14), bestehend aus Flanschprofilen (19) und Eckwinkeln (16), für ein Luftkanalelement (11),
- mit einer Anschlussstelle (41) für die Aufnahme an der Handhabungseinrichtung (32),
- mit einer an der Anschlussstelle (41) vorgesehenen zylindrischen Aufnahme (42), welche um dessen Längsmittelachse einen drehbar ansteuerbaren Kopf (44) aufnimmt,
- mit an dem Kopf (44) radial abstehend angeordneten Flanschprofilgreifern (45),
- mit zumindest einem daran angeordneten Eckwinkelgreifer (51), und
- mit einer Halteeinrichtung (55) zur Aufnahme eines fertiggestellten Rahmens (14).

23. Mehrfachgreifvorrichtung nach Anspruch 22, **dadurch gekennzeichnet, dass** in der Längsmittelachse der zylindrischen Aufnahme (42) und der Anschlussstelle (41) gegenüberliegend das Prägewerkzeug (58) vorgesehen ist.

24. Mehrfachgreifvorrichtung nach Anspruch 22 oder 23, **dadurch gekennzeichnet, dass** der Eckwinkelgreifer (51) als Magnetgreifer mit zumindest einem Haltedorn (52) ausgebildet ist.

25. Mehrfachgreifvorrichtung nach Anspruch 24, **dadurch gekennzeichnet, dass** die Länge des zumindest einen Haltedorns (52) für die Aufnahme der Anzahl der für den Rahmen (14) erforderlichen Eckwinkel (16) ausgebildet ist.

26. Mehrfachgreifvorrichtung nach Anspruch 24 oder 25, **dadurch gekennzeichnet, dass** der Eckwinkelgreifer (51) zumindest ein Anschlagelement zur lagerichtigen Ausrichtung und Aufnahme des zumindest einen Eckwinkels (16) aufweist oder dass zwei Haltedorne (52) vorgesehen sind.

27. Mehrfachgreifvorrichtung nach einem oder mehreren der Ansprüche 22 bis 26, **dadurch gekennzeichnet, dass** an dem Kopf (44) die für die Anzahl des Rahmens (14) erforderlichen Flanschprofile (19) jeweils ein Flanschprofilgreifer (45) vorgesehen ist.

28. Mehrfachgreifvorrichtung nach einem der Ansprüche 22 bis 27, **dadurch gekennzeichnet, dass** der Flanschprofilgreifer (45) als Magnetgreifer ausgebildet ist und vorzugsweise zumindest eine stirnseitige Anlagefläche (46) und eine seitliche Anlagefläche (47) zur Aufnahme des Flanschprofils (19) aufweist.

29. Mehrfachgreifvorrichtung nach einem oder mehreren der Ansprüche 22 bis 28, **dadurch gekennzeichnet, dass** die Flanschprofilgreifer (45) in einem Winkel gleich oder kleiner als 180° zueinander an dem Kopf (44) angeordnet sind und diesem gegenüberliegend der Eckwinkelgreifer(51) ausgerichtet ist.

30. Mehrfachgreifvorrichtung nach einem oder mehreren der Ansprüche 22 bis 29, **dadurch gekennzeichnet, dass** die Halteeinrichtung (55) für die fertiggestellten Rahmen (14) zumindest zwei mit Abstand zueinander ausgerichtete Haltelaschen (56) aufweist, die vorzugsweise am stirnseitigen Ende eine Abrutschsicherung (57) umfassen.
